(19) Europäisches Patentamt
European Patent Office
Office européen des brevets

(11) **EP 3 673 459 B1**

(12) **EUROPÄISCHE PATENTSCHRIFT**

(45) Veröffentlichungstag und Bekanntmachung des Hinweises auf die Patenterteilung:
**15.01.2025 Patentblatt 2025/03**

(21) Anmeldenummer: **18746167.8**

(22) Anmeldetag: **25.07.2018**

(51) Internationale Patentklassifikation (IPC):
***G06T 7/20*** (2017.01)

(52) Gemeinsame Patentklassifikation (CPC):
**G06T 7/20;** G06T 2207/30241

(86) Internationale Anmeldenummer:
**PCT/EP2018/070138**

(87) Internationale Veröffentlichungsnummer:
**WO 2019/038008 (28.02.2019 Gazette 2019/09)**

(54) **VERFAHREN UND VORRICHTUNG ZUR PLAUSIBILISIERUNG EINER FLUSSVEKTOR-HYPOTHESE**

METHOD AND DEVICE FOR CHECKING THE PLAUSIBILITY OF A FLOW VECTOR HYPOTHESIS

PROCÉDÉ ET DISPOSITIF POUR RENDRE PLAUSIBLE UNE HYPOTHÈSE DE VECTEUR DE FLUX

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.08.2017 DE 102017214614**

(43) Veröffentlichungstag der Anmeldung:
**01.07.2020 Patentblatt 2020/27**

(73) Patentinhaber: **Robert Bosch GmbH
70442 Stuttgart (DE)**

(72) Erfinder: **SIMON, Stephan
31079 Sibbesse (DE)**

(56) Entgegenhaltungen:
• **JEFFREY W. MCCANDLESS: "Detection of aircraft in video sequences using a predictive optical flow algorithm", OPTICAL ENGINEERING., vol. 38, no. 3, 1 March 1999 (1999-03-01), BELLINGHAM, pages 523 - 530, XP055503109, ISSN: 0091-3286, DOI: 10.1117/1.602130**

• "DYNAMIC-SCENE AND MOTION ANALYSIS USING PASSIVE SENSORS PART II:. \DISPLACEMENT-FIELD AND FEATURE-BASED APPROACHES", IEEE EXPERT, IEEE SERVICE CENTER, NEW YORK, NY, US, vol. 7, no. 1, 1 February 1992 (1992-02-01), pages 53 - 64, XP000329545, ISSN: 0885-9000

• YILMAZ ALPER ET AL: "Object Tracking: A Survey", ACM COMPUTING SURV, ACM, NEW YORK, NY, US, US, vol. 38, no. 4, 1 December 2006 (2006-12-01), pages 1 - 45, XP007902942, ISSN: 0360-0300

EP 3 673 459 B1

## Beschreibung

### Stand der Technik

Die vorliegende Erfindung betrifft ein Verfahren und eine Vorrichtung zur Plausibilisierung einer Flussvektor-Hypothese

Beim Optischen Fluss (OF) werden Korrespondenzen in zeitlicher Richtung gebildet, indem Zuordnungen zwischen Koordinaten in einem ersten Bild und Koordinaten in einem zweiten Bild bestimmt werden. Eine solche Korrespondenz gibt dann an, wie sich die Projektion eines Punktes in der 3D-Szene ins 2D-Bild von einer alten Koordinate zu einer neuen Koordinate weiterbewegt hat.

Dabei kann die Bewegung im Bild durch die Bewegung des Szenenpunktes oder durch die Bewegung der Kamera hervorgerufen sein, oder beides zugleich.

Jeffrey W. McCandless offenbart in "Detection of aircraft in video sequences using a predictive optical flow algorithm", OPTICAL ENGINEERING., Bd. 38, Nr. 3, 1. März 1999, Seite 523-530, XP055503109 einen Bildverarbeitungsalgorithmus, welcher den optischen Fluss bestimmt, um bewegte Objekte zu erkennen.

In verschiedenen Produkten wird der optische Fluss bereits eingesetzt, beispielsweise in Fahrerassistenzsystemen.

Die Aufgabe der vorliegenden Erfindung ist es, eine Beurteilung von Flussvektoren zu verbessern.

### Offenbarung der Erfindung

Die obige Aufgabe wird erfindungsgemäß entsprechend der unabhängigen Ansprüche 1 und 9 gelöst.

Das erfindungsgemäße Verfahren zur Plausibilisierung einer Flussvektor-Hypothese, umfasst ein Ermitteln eines einem Merkmal zugehörigen Prädiktionsvektors basierend auf einer Bewegung des Merkmals zwischen einem ersten Bild und einem zweiten Bild, wobei das zweite Bild ein auf das erste Bild folgendes Bild in einer Abfolge von Bildern ist, ein Erzeugen eines dem Merkmal zugehörigen Hypothesenvektors, welcher eine vermutliche Bewegung des Merkmals zwischen dem zweiten Bild und einem dritten Bild beschreibt, wobei das dritte Bild ein auf das zweite Bild folgendes Bild in einer Abfolge von Bildern ist, ein Berechnen eines Ähnlichkeitsgrads zwischen dem Prädiktionsvektor und dem Hypothesenvektor basierend auf einem Unterschied zwischen dem Prädiktionsvektor und dem Hypothesenvektor, und ein Bewerten einer Plausibilität des Hypothesenvektors basierend auf dem errechneten Ähnlichkeitsgrad, wobei bewertet wird, ob der Hypothesenvektor eine tatsächliche Bewegung des Merkmals zwischen dem zweiten Bild und dem dritten Bild beschreibt.

Die erfindungsgemäße Vorrichtung zur Plausibilisierung einer Flussvektor-Hypothese umfasst eine Recheneinheit, welche dazu eingerichtet ist, einen einem Merkmal zugehörigen Prädiktionsvektor basierend auf einer Bewegung des Merkmals zwischen einem ersten Bild und einem zweiten Bild zu ermitteln, wobei das zweite Bild ein auf das erste Bild folgendes Bild in einer Abfolge von Bildern ist, einen dem Merkmal zugehörigen Hypothesenvektor zu erzeugen, welcher eine vermutliche Bewegung des Merkmals zwischen dem zweiten Bild und einem dritten Bild beschreibt, wobei das dritte Bild ein auf das zweite Bild folgendes Bild in einer Abfolge von Bildern ist, einen Ähnlichkeitsgrads zwischen dem Prädiktionsvektor und dem Hypothesenvektor basierend auf einem Unterschied zwischen dem Prädiktionsvektor und dem Hypothesenvektor zu errechnen, und eine Plausibilität des Hypothesenvektors basierend auf dem errechneten Ähnlichkeitsgrad zu bewerten, wobei bewertet wird, ob der Hypothesenvektor eine tatsächliche Bewegung des Merkmals zwischen dem zweiten Bild und dem dritten Bild beschreibt.

Das erste, zweite und dritte Bild sind Bilder einer Abfolge von Bildern. Die Abfolge von Bildern ist dabei beispielsweise eine Videosequenz. Dabei tritt bevorzugt zuerst das erste Bild, dann das zweite Bild und dann das dritte Bild in zeitlicher Abfolge in der Abfolge von Bildern auf.

Das Merkmal ist ein in dem Bild abgebildetes Merkmal. Die Abbildung des Merkmals beschränkt sich dabei insbesondere auf einen einzelnen Bildpunkt oder eine Gruppe von Bildpunkten. Durch die Bewegung des Merkmals zwischen den Bildern wird eine Bewegung eines Objektes in der von dem Bild dargestellten Umgebung und/oder eine Bewegung einer Kamera, durch welche die Bilder erfasst wurden, widergegeben.

Bei dem Ermitteln des dem Merkmal zugehörigen Prädiktionsvektors wird eine Bewegung des Merkmals zwischen dem ersten Bild und dem zweiten Bild erfasst. Es wird somit eine Positionsänderung des Merkmals zwischen zwei Bildern erfasst und daraus auf eine zukünftig zu erwartende Positionsänderung des Merkmals geschlossen. Diese Bewegung kann durch einen Vektor beschrieben werden, welcher einen Ausgangspunkt der Bewegung in dem ersten Bild mit einem Endpunkt der Bewegung in dem zweiten Bild verbindet. Gerade in Abfolgen von Bildern, welche von einer Kamera erfasst wurden, bewegen sich Objekte zwischen einzelnen Bildern typischerweise kontinuierlich. Das bedeutet, dass eine Bewegung des Objektes sich nicht sprunghaft in ihrer Richtung oder ihrer Geschwindigkeit verändert. Durch die Bewegung des Merkmals zwischen dem ersten Bild und dem zweiten Bild kann somit abgeschätzt werden, wie das Merkmal sich zwischen dem zweiten und dem dritten Bild bewegen wird. Diese Bewegung wird durch den Prädiktionsvektor beschrieben. Der Prädiktionsvektor ist dabei im einfachsten Falle gleich einem Bewegungsvektor, welcher die Bewegung des Merkmals zwischen dem ersten Bild und dem zweiten Bild beschreibt. In das Ermitteln des Prädiktionsvektors fließen bevorzugt noch weitere Informationen ein. So kann beispielsweise eine Bewegung der Kamera erfasst werden und diese Bewegung dem Bewegungsvektor geeignet hinzugefügt werden, um daraus den Prädiktionsvektor zu ermitteln. Der Prädiktor beschreibt somit eine zu erwartende Bewegung des Merkmals zwischen dem zweiten Bild und dem dritten Bild.

Unter einem geeigneten Hinzufügen der Bewegung der Kamera kann beispielsweise verstanden werden, dass die Bewegung des Merkmals zwischen dem ersten Bild und dem zweiten Bild zunächst zerlegt wird in einen ersten Anteil, der durch die kontinuierliche Bewegung des Objekts hervorgerufen ist und einen zweiten Anteil, der durch die Bewegung der Kamera hervorgerufen ist.

Für beide Anteile kann getrennt eine Vorhersage getroffen werden.

So kann beispielsweise angenommen werden, dass sich das Objekt entsprechend der bisher beobachteten Bewegung weiterbewegen wird, z.B. mit unveränderter Geschwindigkeit im Raum oder mit unveränderter Beschleunigung im Raum. Für die Bewegung der Kamera können gegebenenfalls sogar Messungen vorliegen, die z.B. von weiteren Sensoren stammen (z.B. Fahrzeug-Odometrie und/oder Inertialsensorik) oder aus den Kamerabildern gewonnen werden, wobei aus einer Mehrzahl von Vektoren die Eigenbewegung bestimmt wird. Die Prädiktion der Bewegung des Merkmals zwischen dem zweiten Bild und dem dritten Bild kann dann durch Zusammenfügen, z.B. Addition, der beiden Anteile gebildet werden, also einem ersten Anteil für die Bewegungsprädiktion des Objekts und einem zweiten Anteil für die Bewegung der Kamera. Der zweite Anteil kann dabei gemessen sein, was zu einer höheren Genauigkeit gegenüber einer Prädiktion durch einfache Fortschreibung führen kann.

Bei dem Erzeugen des dem Merkmal zugehörigen Hypothesenvektors wird eine Vermutung aufgestellt, wie das Merkmal sich zwischen dem zweiten Bild und dem dritten Bild bewegt hat. Dazu erfolgt beispielsweise eine Analyse des dritten Bildes dahingehend, wo in dem dritten Bild Merkmale befindlich sind, welche dem gesuchten Merkmal, für welches der Hypothesenvektor erzeugt wird, ähnlich sind. So kann beispielsweise analysiert werden, wo sich Bildpunkte mit ähnlichen Farbeigenschaften in dem zweiten und dem dritten Bild befinden. Dabei kann insbesondere auch die Anforderung berücksichtigt werden, dass jedem Merkmal eines Bildes maximal ein Flussvektor zugeteilt werden soll. Ein Hypothesenvektor ist ein Flussvektor, welcher als ein für das Merkmal zugehöriger korrekter Flussvektor angesehen wird. Dabei besteht jedoch die Möglichkeit, dass die dem Hypothesenvektor zugrundeliegende Analyse fehlerhaft ist. Daher wird von einem Hypothesenvektor gesprochen, da zunächst lediglich eine Hypothese aufgestellt wird.

Bei dem Berechnen des Ähnlichkeitsgrads zwischen dem Prädiktionsvektor und dem Hypothesenvektor können insbesondere Verknüpfungskosten berechnet werden, welche den Ähnlichkeitsgrad beschreiben. Dabei beschreiben hohe Verknüpfungskosten einen niedrigen Ähnlichkeitsgrad und niedrige Verknüpfungskosten einen hohen Ähnlichkeitsgrad. Es wird somit mit dem Ähnlichkeitsgrad ein Indikator bereitgestellt, welcher eine Einschätzung ermöglicht, ob eine Bewegung des Merkmals zwischen dem ersten und dem zweiten Bild im Rahmen einer Toleranz der Bewegung des Merkmals zwischen dem zweiten und dem dritten Bild entspricht, so das Merkmal sich gemäß dem Hypothesenvektor bewegt. Unter der Annahme, dass sich die Bewegung eines Objektes nicht sprunghaft in ihrer Richtung oder ihrer Geschwindigkeit verändert, kann davon ausgegangen werden, dass der Hypothesenvektor im Rahmen der Toleranz dem Prädiktionsvektor entspricht. Auf diese Weise ergibt sich ein hoher Ähnlichkeitsgrad und gegebenenfalls geringe Verknüpfungskosten, falls der Ähnlichkeitsgrad für einen Hypothesenvektor berechnet wird, der eine tatsächliche Bewegung des Merkmals zwischen dem zweiten und dem dritten Bild beschreibt, also wenn der Hypothesenvektor auf einer korrekten Hypothese basiert. Wird eine falsche Hypothese aufgestellt, beispielsweise weil in dem dritten Bild ein Bildpunkt oder eine Kombination von Bildpunkten wegen einer farblichen Ähnlichkeit fälschlich für das Merkmal gehalten wird, für welches der Hypothesenvektor erzeugt wird, so wird sich ein geringer Ähnlichkeitsgrad und gegebenenfalls hohe Verknüpfungskosten ergeben, da durch den Prädiktionsvektor definiert ist, wo in dem dritten Bild das betrachtete Merkmal im Rahmend er Toleranz erwartungsgemäß abgebildet sein sollte.

Der Unterschied zwischen dem Prädiktionsvektor und dem Hypothesenvektor ist insbesondere durch einen Unterschied in deren Längen und/oder in deren Orientierungen definiert. Durch die Länge wird eine Bewegungsgeschwindigkeit des Merkmals in der Abfolge von Bildern beschrieben. Durch die Orientierung wird eine Bewegungsbahn des Merkmals in der Abfolge von Bildern beschrieben. Somit wird durch einen Unterschied, welcher auf der Länge und/oder der Orientierung der Vektoren basiert, eine tatsächliche Bewegung eines dem Merkmal zugehörigen Objektes gegenüber einer Kamera, welche die Bilder erfasst, besonders einfach beschrieben. Dabei ist insbesondere eine getrennte Betrachtung von Längen und Orientierung vorteilhaft, da deren Änderungen über einen Verlauf der Abfolge von Bildern unterschiedliche Annahmen zugrunde gelegt werden können.

Bei dem Bewerten der Plausibilität des Hypothesenvektors wird die Plausibilität höher bewertet, wenn sich bei dem Berechnen des Ähnlichkeitsgrades eine größere Ähnlichkeit zwischen dem Prädiktionsvektor und dem Hypothesenvektor ergibt, als wenn sich eine im Vergleich geringe Ähnlichkeit zwischen dem Prädiktionsvektor und dem Hypothesenvektor ergibt. Die Plausibilität beschreibt, ob die dem Hypothesenvektor zugrundeliegende Flussvektor-Hypothese als korrekt anzusehen ist. Dabei wird davon ausgegangen, dass die Flussvektor-Hypothese korrekt ist, der Hypothesenvektor also eine hohe Plausibilität aufweist, wenn der Ähnlichkeitsgrad hoch ist. Entsprechend wird davon ausgegangen, dass die Flussvektor-Hypothese falsch ist, der Hypothesenvektor also eine niedrige Plausibilität aufweist, wenn der Ähnlichkeitsgrad gering ist.

Im einfachsten Falle wird die Plausibilität ausschließlich basierend auf dem Ähnlichkeitsgrad bewertet. Es ist jedoch auch eine Kombination mit weiteren Validierungsverfahren möglich, welche durch eine alternative Herangehensweise eine Bewertung der Plausibilität ermöglichen. So könnte beispielsweise die Plausibilität durch das erfindungsgemäße Verfahren hoch eingestuft werden, könnte aber parallel durch eine konkurrierende Bewertung herabgesetzt werden.

Stehen mehrere konkurrierende Hypothesenvektoren für die Bewegung eines Merkmalspunktes zur Verfügung, so kann derjenige Hypothesenvektor ausgewählt werden, der zu den dem höchsten Ähnlichkeitsgrad bzw. zu den geringsten Verknüpfungskosten bezüglich des gegebenen Prädiktionsvektors führt, sofern diese einen Schwellwert unterschreiten bzw. nicht überschreiten. Alternativ ist es möglich, die Hypothesenvektoren anhand des jeweils ermittelten Ähnlichkeitsgrades bzw. der jeweils ermittelten Verknüpfungskosten in eine Reihenfolge zu ordnen, z.B. um somit die N plausibelsten Hypothesenvektoren zu ermitteln.

Durch das erfindungsgemäße Verfahren und die erfindungsgemäße Vorrichtung wird ermöglicht, dass eine Robustheit bei einer Bewertung einer Flussvektor-Hypothese erhöht wird. Es wird somit ermöglicht, ein Flussfeld mit besonders hoher Zuverlässigkeit zu erzeugen.

Die erfindungsgemäße Vorrichtung ist dazu eingerichtet das erfindungsgemäße Verfahren auszuführen.

Die Unteransprüche zeigen bevorzugte Weiterbildungen der Erfindung.

Es ist vorteilhaft, wenn das Verfahren in einer Schleife ausgeführt wird, wobei in einem aktuellen Schleifendurchlauf dem Hypothesenvektor des Merkmals eine Information zugeordnet wird, welche auf einer Information basiert, die dem Hypothesenvektor des Merkmals in einem vorangegangenen Schleifendurchlauf zugeordnet ist. So können neben einer durch den Hypothesenvektor beschriebenen Bewegung des Merkmals in der Abfolge von Bildern auch weitere Informationen über die Abfolge von Bildern hinweg transportiert werden. Die mit einem Hypothesenvektor verknüpften Informationen eines Bildes können insbesondere für die Bewertung der Plausibilität des Hypothesenvektors eines folgenden Bildes genutzt werden. Auch können einem Merkmal Informationen zugeordnet werden, die Eigenschaften eines durch das Merkmal abgebildeten Objekts beschreiben. Insbesondere ist es dabei vorteilhaft, wenn der Hypothesenvektor, welcher in einem ersten Schleifendurchlauf als plausibel eingestuft wurde, als Flussvektor zusammen mit der verknüpften Information in ein Flussfeld übernommen wird und in einem folgenden zweiten Schleifendurchlauf der Hypothesenvektor zusammen mit der verknüpften Information als Prädiktionsvektor des Merkmals für den zweiten Schleifendurchlauf aus dem Flussfeld ausgelesen wird.

Ferner ist es vorteilhaft, wenn die dem Hypothesenvektor zugeordnete Information ein Ergebnis einer Verknüpfungsprüfung ist, wobei die Verknüpfungsprüfung in jedem Schleifendurchlauf ausgeführt wird, wobei der Prädiktionsvektor und der Hypothesenvektor des Merkmals bei der Verknüpfungsprüfung als miteinander verknüpft angesehen werden, wenn der Ähnlichkeitsgrad zwischen dem Prädiktionsvektor und dem Hypothesenvektor ein vorgegebenes Maß überschreitet, und in jedem Schleifendurchlauf das Bewerten der Plausibilität des Hypothesenvektors ferner basierend darauf erfolgt, ob in einem oder mehreren vorangegangenen Schleifendurchläufen der Prädiktionsvektor und der Hypothesenvektor des Merkmals als miteinander verknüpft angesehen wurden. Dadurch, dass das Bewerten der Plausibilität des Hypothesenvektors ferner basierend darauf erfolgt, ob in einem oder mehreren vorangegangenen Schleifendurchläufen der Prädiktionsvektor und der Hypothesenvektor des Merkmals als miteinander verknüpft angesehen wurden erfolgt eine Betrachtung einer Vorgeschichte des Hypothesenvektors. Diese Vorgeschichte des Hypothesenvektors wird auch als Alter des Hypothesenvektors bezeichnet. So weist ein Hypothesenvektor ein hohes Alter auf, wenn der Prädiktionsvektor und der Hypothesenvektor des Merkmals bereits mehrfach in aufeinanderfolgenden Schleifendurchläufen als miteinander verknüpft angesehen wurden. Insbesondere kann eine Anzahl der aufeinanderfolgenden Schleifendurchläufe, in welchen der Prädiktionsvektor und der Hypothesenvektor des Merkmals als miteinander verknüpft angesehen wurden, als ein Altersattribut dem Hypothesenvektor als Information zugeordnet werden. Durch die Betrachtung der Vorgeschichte eines Hypothesenvektors kann die Plausibilität mit hoher Zuverlässigkeit bestimmt werden. Es fließt somit zusätzliche eine Bewertung von Bewegungen eines Merkmals in die Bewertung der Plausibilität ein, welche sich aus mehreren vorangehenden Bildern der Abfolge von Bildern ergibt. So wird der Hypothesenvektor nur dann als besonders plausibel angesehen, wenn das zugehörige Merkmal, für welches die Hypothese erstellt wurde, kontinuierlich niedrige Verknüpfungskosten in aufeinanderfolgenden Schleifendurchläufen aufweist. Auf diese Weise erfolgt eine historische Bewertung der Hypothese, welche besonders zuverlässig ist.

Auch ist es vorteilhaft, wenn die dem Hypothesenvektor zugeordnete Information eine Objektklasse eines dem Merkmal zugehörigen Objektes beschreibt. So wird insbesondere eine Information mit dem Merkmal verknüpft, welche angibt, dass das dem Hypothesenvektor zugehörige Merkmal ein Objekt einer bestimmten Objektklasse darstellt. Dabei wird beispielsweise ein Wahrscheinlichkeitswert mit dem Merkmal verknüpft, welcher eine Wahrscheinlichkeit beschreibt, dass das Merkmal ein Objekt einer bestimmten Objektklasse darstellt. Der Wahrscheinlichkeitswert wird dabei dem Merkmal bevorzugt in einem Flussfeld zugeordnet. Die Objektklasse beschreibt dabei insbesondere, was für ein Objekt durch das Merkmal abgebildet wird. Dabei sind in einer Objektklasse insbesondere solche Objekte zusammengefasst, welcher im Rahmen vordefinierter Angaben ähnliche Bewegungseigenschaften aufweisen. Insbesondere wird die Objektklasse für das Bewerten der Plausibilität des Hypothesenvektors herangezogen, um beispielsweise einen Ähnlichkeitsgrad zwischen dem Prädiktionsvektor und dem Hypothesenvektor zu definieren, welcher mindestens vorliegen muss, damit die Plausibilität des Hypothesenvektors positiv bewertet wird. So wird insbesondere ein Schwellenwert für den Ähnlichkeitsgrad auf einen ersten Wert gesetzt, wenn die dem Merkmal zugeordnete Objektklasse eine erste Objektklasse ist, welche beispielsweise Objekte des Typs "Person" umfasst.

Ferner wird der Schwellenwert für den Ähnlichkeitsgrad auf einen zweiten Wert gesetzt, wenn die dem Merkmal zugeordnete Objektklasse eine zweite Objektklasse ist, welche beispielsweise Objekte des Typs "Fahrzeug" umfasst. Der erste Wert ist geringer als der zweite Wert. Die höhere Bewertung der Plausibilität erfolgt nur dann, wenn der Schwellenwert nicht überschritten wird. Auf diese Weise wird bei den beispielhaften Objektklassen "Person" und "Fahrzeug" beispielsweise berücksichtigt, dass für Fahrzeuge eine höhere Kontinuität in deren Bewegung in der Abfolge von Bildern zu erwarten ist als bei Personen.

Bei dem Berechnen eines Ähnlichkeitsgrads zwischen dem Prädiktionsvektor und dem Hypothesenvektor wird eine Abweichung in orthogonaler Richtung gegenüber dem Prädiktionsvektor strenger bewertet als eine Abweichung in longitudinaler Richtung gegenüber dem Prädiktionsvektor oder eine Abweichung in orthogonaler Richtung gegenüber dem Hypothesenvektor strenger bewertet als eine Abweichung in longitudinaler Richtung gegenüber dem Hypothesenvektor. Eine strengere Bewertung bedeutet, dass ein Einfluss auf den berechneten Ähnlichkeitsgrad größer ist.

Dadurch wird berücksichtigt, dass ein sich auf einer Gerade in gleichen Schritten bewegender 3D-Punkt eines Objektes sich nach seiner Projektion in ein Bild sich im Allgemeinen nicht in gleich großen Schritten bewegt. Vielmehr sind die Schritte im Bild größer, wenn der Punkt näher an der Kamera ist, und die Schritte sind kleiner, wenn der Punkt weiter von der Kamera entfernt ist.

Ferner ist es vorteilhaft, wenn der Prädiktionsvektor aus einem Flussfeld ermittelt wird, welches einen Rückwärtsfluss beschreibt, und/oder der Hypothesenvektor aus einem Flussfeld ermittelt wird, welches einen Vorwärtsfluss beschreibt. Bei einer solchen Berechnung des Prädiktionsvektors und/oder des Hypothesenvektors endet der Prädiktionsvektor (als Rückwärtsfluss) an der Bildposition des zweiten Bildes, an welcher der Hypothesenvektor (als Vorwärtsfluss) beginnt, wodurch eine Zuordnung zwischen Prädiktionsvektor und Hypothesenvektor also bereits implizit gegeben ist und nicht erst ermittelt werden muss. So erfolgt ein solches Berechnen eines Rückwärtsflusses und eines Vorwärtsflusses im Rahmen einer Erzeugung eines Flussfeldes, da dieses für eine Auswertung des Flussfeldes benötigt wird. Somit kann die zusätzliche Plausibilisierung einer oder mehrerer Flussvektor-Hypothesen mit geringem zusätzlichem Rechenaufwand basierend auf verfügbaren Daten erfolgen.

Auch ist es vorteilhaft, wenn bei dem Berechnen des Ähnlichkeitsgrades eine Anpassung des Prädiktionsvektors erfolgt, durch welchen eine Kamerabewegung zwischen einem Erfassen des ersten Bildes und des zweiten Bildes kompensiert wird und/oder eine Kamerabewegung zwischen einem Erfassen des zweiten Bildes und des dritten Bildes kompensiert wird. Somit kann vermieden werden, dass eine Änderung einer Position des Merkmals in den Bildern, welche sich nicht aus einer Eigenbewegung des zugehörigen Objektes ergibt, in das Berechnen des Ähnlichkeitsgrades einfließt und dieses verfälscht.

Zudem ist es vorteilhaft, wenn der Ähnlichkeitsgrad mittels einer vorgegebenen Funktion aus dem Unterschied zwischen dem Prädiktionsvektor und dem Hypothesenvektor ermittelt wird, wobei durch die vorgegebene Funktion insbesondere eine Gewichtung des Unterschieds zwischen dem Prädiktionsvektor und dem Hypothesenvektor erfolgt. So kann der Ähnlichkeitsgrad zwischen dem Prädiktionsvektor und dem Hypothesenvektor geometrisch errechnet werden und in einen einfachen numerischen Wert für den Ähnlichkeitsgrad umgesetzt werden. Die Gewichtung des Unterschiedes erfolgt dabei insbesondere so, dass ein geringer Unterschied zu einem besonders großen Ähnlichkeitsgrad und ggf. zu besonders niedrigen Verknüpfungskosten führt und ein großer Unterschied zu einem besonders geringen Ähnlichkeitsgrad und ggf. zu besonders hohen Verknüpfungskosten führt. Die Gewichtung erfolgt insbesondere in nicht-linearer Weise gegenüber dem Ähnlichkeitsgrad.

Erfindungsgemäß wird bei dem Berechnen des Ähnlichkeitsgrades der Unterschied mittels eines Differenzvektors ermittelt, welcher durch ein Bilden einer Differenz aus dem Prädiktionsvektor und dem Hypothesenvektor erzeugt wird. Ein solcher Differenzvektor ist ein einfach zu errechnender Parameter, welcher die Ähnlichkeit zwischen dem Prädiktionsvektor und dem Hypothesenvektor beschreibt. Bevorzugt werden Prädiktionsvektor und Hypothesenvektor jeweils zerlegt in einen ersten Anteil, der durch die Bewegung des Objekts hervorgerufen ist und einen zweiten Anteil, der durch die Bewegung der Kamera hervorgerufen ist, so ist es von Vorteil, den Differenzvektor nur anhand der durch die Bewegung des Objekts hervorgerufen Anteile zu ermitteln.

Erfindungsgemäß wird bei dem Berechnen des Ähnlichkeitsgrades der Unterschied mittels zweier Vektorkomponenten des Differenzvektors ermittelt, wobei eine unterschiedliche Gewichtung der beiden Vektorkomponenten erfolgt. Damit erfolgt eine unterschiedliche Wertung des Unterschiedes, welche davon abhängig ist, in welche Richtung eine Abweichung zwischen dem Prädiktionsvektor und dem Hypothesenvektor vorliegt. So wird insbesondere eine Abweichung, welche orthogonal zu einer Orientierung des Hypothesenvektors, alternativ orthogonal zu einer Orientierung des Prädiktionsvektors, gerichtet ist höher gewichtet und fließt stärker in den Ähnlichkeitsgrad ein als eine Abweichung, welche longitudinal zu einer Orientierung des Hypothesenvektors, alternativ longitudinal zu einer Orientierung des Prädiktionsvektors, gerichtet ist. Auf diese Weise wird beispielsweise ermöglicht, dass Abweichungen in longitudinaler Richtung anders, insbesondere weniger streng, bewertet werden als Abweichungen in orthogonaler Richtung. Dadurch kann z.B. die Tatsache berücksichtigt werden, dass ein sich auf einer Gerade in gleich großen Schritten bewegender 3D-Punkt nach der Projektion ins Bild sich i.allg. nicht in gleich großen Schritten im Bild bewegt. Vielmehr sind die Schritte im Bild größer, wenn der Punkt näher an der Kamera ist, und kleiner, wenn der Punkt weiter entfernt ist.

Ferner ist es vorteilhaft, wenn bei dem Erzeugen eines dem Merkmal zugehörigen Hypothesenvektors mehrere dem Merkmal zugehörige Hypothesenvektoren erzeugt werden und das Berechnen des Ähnlichkeitsgrads und das Bewerten der Plausibilität für jeden der Hypothesenvektoren erfolgt. Somit kann eine vorteilhafte Auswahl eines zu bevorzugenden Hypothesenvektors geschaffen werden. Es erfolgt insbesondere eine Auswahl eines der Hypothesenvektoren basierend auf der Plausibilität. So wird bevorzugt der Hypothesenvektoren mit der höchsten Plausibilität als ein solcher Hypothesenvektor angesehen, welcher eine tatsächliche Bewegung des Merkmals zwischen dem zweiten Bild und dem dritten Bild beschreibt. Dabei ist es jedoch auch möglich, dass alle der Hypothesenvektoren verworfen werden, wenn deren Plausibilität beispielsweise unterhalb eines vorgegebenen Schwellenwertes liegt, da der zugehörige Ähnlichkeitsgrad zu niedrig ist.

Kurze Beschreibung der Zeichnungen

Nachfolgend werden Ausführungsbeispiele der Erfindung unter Bezugnahme auf die begleitende Zeichnung im Detail beschrieben. In der Zeichnung ist:

Figur 1 eine Darstellung einer beispielhaften Abfolge von Bildern,

Figur 2 eine Darstellung eines beispielhaften Prädiktionsvektors und eines beispielhaften Hypothesenvektors,

Figur 3 eine Darstellung von Prädiktionsvektoren und Hypothesenvektoren, welche zu unterschiedlichen Verknüpfungskosten führen,

Figur 4 eine beispielhafte Funktion zur Gewichtung von Verknüpfungskosten, und

Figur 5 eine Vorrichtung zum Plausibilisieren einer Flussvektor-Hypothese.

Ausführungsformen der Erfindung

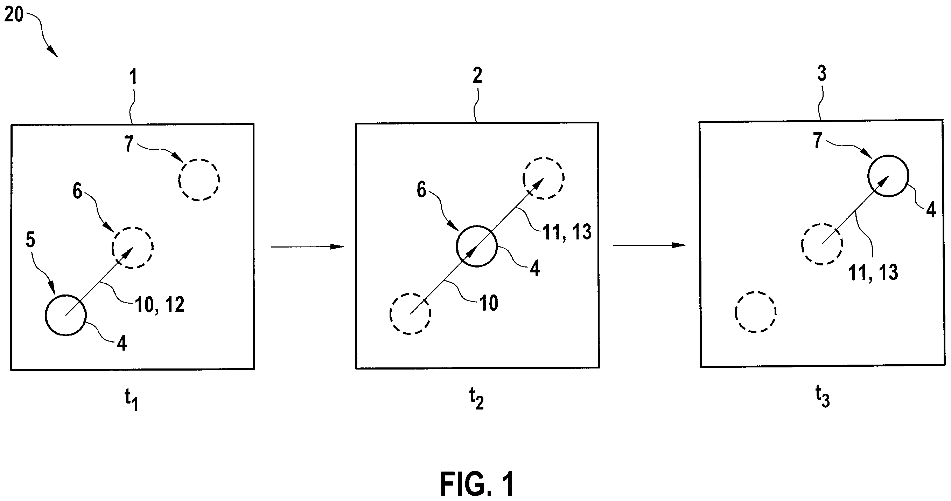

Fig. 1 zeigt eine beispielhafte Abfolge von Bildern 20. Die Abfolge von Bildern 20 umfasst ein erstes Bild 1, ein zweites Bild 2 und ein drittes Bild 3. In der gezeigten beispielhaften Abfolge von Bildern 20 folgt das zweite Bild 2 unmittelbar auf das erste Bild 1 und das dritte Bild 3 unmittelbar auf das zweite Bild 2. Zwischen den einzelnen Bildern können jedoch auch weitere Bilder in der Abfolge von Bildern 20 liegen. Die Abfolge von Bildern 20 ist eine von einer Kamera 41 erfasste Videosequenz.

Von der Kamera 41 wurde ein Objekt erfasst, welches in den Bildern 1, 2, 3 als ein Merkmal 4 des jeweiligen Bildes 1, 2, 3 dargestellt wird. So beweget sich das Merkmal 4 in der dargestellten Abfolge von Bildern 20 von links Unten nach rechts Oben durch das von der Videosequenz dargestellte Bild. In Figur 1 befindet sich das Merkmal dabei nur an der Stelle des jeweiligen Bildes 1, 2, 3, an der dieses mit einer durchgezogenen Linie dargestellt ist. Durch die gestrichelten Linien ist eine Position des Merkmals 4 in den übrigen Bildern dargestellt. So befindet sich das Merkmal 4 in dem ersten Bild 1 an einer ersten Position 5. In dem zweiten Bild 2 befindet sich das Merkmal 4 an einer zweiten Position 6. In dem dritten Bild 3 befindet sich das Merkmal 4 an einer dritten Position 7. Das Merkmal 4 ist dabei insbesondere auf eine geringe Anzahl von Bildpunkten beschränkt.

Ferner sind in Figur 1 zwei dem Merkmal 4 zugehörige Flussvektoren 10, 11 dargestellt. Ein erster Flussvektor 10 beschreibt eine Bewegung des Merkmals 4 zwischen dem ersten Bild 1 und dem zweiten Bild 2. Ein zweiter Flussvektor 11 beschreibt eine Bewegung des Merkmals 4 zwischen dem zweiten Bild 2 und dem dritten Bild 3.

Der zweite Flussvektor 11 wurde mittels einer Bildanalyse aus dem zweiten Bild 2 und dem dritten Bild 3 ermittelt. Dies geschieht, indem eine Flussvektor-Hypothese erzeugt oder aufgestellt wird. Mit der Flussvektor-Hypothese wird ein Hypothesenvektor 13 erzeugt. Der zweite Flussvektor 11 entspricht somit dem Hypothesenvektor 13. Dabei kann es vorkommen, dass es bei der Bildanalyse zu falschen Ergebnissen kommt. Bei der Bildanalyse besteht das Problem, dass das in dem dritten Bild 3 dargestellte Merkmal 4 einem anderen Objekt zugehörig sein könnte als das in dem zweiten Bild 2 dargestellte Merkmal 4. In diesem Falle wäre zwar ein Hypothesenvektor 13 ermittelt worden, dieser ist aber kein korrekter Flussvektor, da dieser nicht die Bewegung des Merkmals 4 in der Abfolge von Bildern 20 beschreibt, sondern Positionen unterschiedlicher Merkmale verbindet. Es ist somit nicht sicher, ob der zweite Flussvektor 11 ein korrekter Flussvektor ist. Daher wird von einer Flussvektor-Hypothese gesprochen. Der bei dem Erzeugen der Flussvektor-Hypothese errechnete Flussvektor wird daher als Hypothesenvektor 13 bezeichnet. Da nicht abschließend feststeht, ob dieser ein korrekter Flussvektor ist, wird durch den Hypothesenvektor 13 eine vermutliche Bewegung des Merkmals 4 zwischen dem zweiten Bild 2 und einem dritten Bild 3 beschrieben.

Es wird zwischen Vorwärtsfluss und Rückwärtsfluss unterschieden, wobei damit ausgedrückt wird, in welchem Bild ein Referenzpixel liegt und in welchem Bild eine Korrespondenz gesucht wurde (Suchrichtung). Wird das Ergebnis als Flussfeld (in Matrix-Struktur) bereitgestellt, so ist mit der Suchrichtung in der Regel auch festgelegt, in welchem Koordinatensystem ein Flussfeld abgelegt ist. Ein Flussfeld ist dabei ein Feld aus Flussvektoren, in dem alle, oder zumindest alle berechneten, Flussvektoren eingetragen sind, die sich für ein Paar zweier Bilder ergeben. Zusätzlich können den Flussvektoren jeweils auch Attribute zugeordnet sein.

Dabei wird für einen Vorwärtsfluss das Referenzpixel in einem vorherigen Bild und die Korrespondenz in einem aktuellen Bild gesucht. Das Ergebnis wird in den Koordinaten des vorherigen Bildes abgelegt. Für einen Rückwärtsfluss wird für das Referenzpixel im aktuellen Bild die Korrespondenz im vorherigen Bild gesucht. Das Ergebnis wird in den Koordinaten des aktuellen Bildes abgelegt. In beiden Fällen werden die Vorzeichen der Flussvektorkomponenten des jeweiligen Flussvektors 10, 11 aber gleichartig festgelegt, und zwar so, dass eine horizontale Komponente positiv bei Bewegung nach rechts im Bild ist, und eine vertikale Komponente positiv bei Bewegung nach unten im Bild ist.

Das Vertrauen in die Flussvektor-Hypothese und somit eine Plausibilität des Hypothesenvektors 13 nimmt zu, wenn der Hypothesenvektor 13 im zurückliegenden Zeitschritt bereits einen Vorgänger hatte, der in Richtung und Betrag zu der betrachteten Flussvektor-Hypothese "passt". Dabei liegt die Annahme zu Grunde, dass sich das dem Merkmal 4 zugehörige Objekt aufgrund seiner Masse "träge" bewegt und dass sich die Kamera 41 ebenfalls träge bewegt, weil sie mit einem massebehafteten Objekt (z. B. einem Fahrzeug) starr verbunden ist. Schlagartige Richtungsänderungen treten in der Bildebene also praktisch nicht auf. Eine hinreichend hohe zeitliche Abtastrate der Kamera 41 wird dabei vorausgesetzt.

Es erfolgt daher ein Ermitteln eines Prädiktors, welcher durch einen Prädiktionsvektor 12 eine Bewegung des Merkmals 4 zwischen dem ersten Bild 1 und dem zweiten Bild 2 beschreibt, wobei das zweite Bild 2 ein auf das erste Bild 1 folgendes Bild in der Abfolge von Bildern 20 ist. Der Prädiktionsvektor 12 entspricht daher in dem in Figur 1 gezeigten Beispiel dem ersten Flussvektor 12.

Das erste bis dritte Bild 1, 2, 3 wurden von der Kamera 41 aufgenommen. Dabei wurde das erste Bild 1 zu einem ersten Zeitpunkt $t_1$, das zweite Bild 2 zu einem zweiten Zeitpunkt $t_2$ und das dritte Bild 3 zu einem dritten Zeitpunkt $t_3$ aufgenommen. Die Bilder 1, 2, 3 sind nacheinander aufgenommen mit $t_1 < t_2 < t_3$, aber nicht zwingend unbedingt unmittelbar nacheinander (es können also noch weitere Bilder dazwischen aufgenommen worden sein). Ein konstanter zeitlicher Abstand zwischen den Bildern 1, 2, 3 ist nicht erforderlich. Dies bedeutet, dass der Quotient q

$$q = \frac{t_3 - t_2}{t_2 - t_1}$$

im allgemeinen also auch ungleich 1 sein kann.

Als Prädiktion kann beispielsweise ein bereits vorhandenes optisches Flussfeld zwischen den Zeitpunkten $t_1$ und $t_2$ verwendet werden. Dieses liegt bevorzugt als Rückwärtsfluss vor, denn dies hat den Vorteil, dass die Prädiktionsvektoren 12 bereits im richtigen Koordinatensystem vom gemeinsamen Zeitpunkt $t_2$ vorliegen, also nicht mehr umgerechnet werden (gewarpt) müssen. Somit wird der Prädiktionsvektor 12 aus einem Flussfeld ermittelt, welches einen Rückwärtsfluss beschreibt.

Das für die Prädiktion verwendete Flussfeld kann auch auf andere Weise erzeugt werden, z. B. unter Verwendung eines dreidimensionalen Szenenmodells und Annahmen über die Kamerapositionen zu den betrachteten Zeitpunkten, woraus das erwartete Flussfeld dann errechnet werden kann.

Es wird im Folgenden beispielhaft von dem einfachsten Fall ausgegangen, nämlich dass für die Bereitstellung der Prädiktion kein besonderer Aufwand getrieben werden muss, und die Prädiktion aus dem alten Flussfeld besteht

bzw. erzeugt wird. Das Prädiktions-Flussfeld und somit die in dem Prädiktions-Flussfeld definierten Flussvektoren werden optional mit einem Faktor skaliert, um die Flussvektoren und somit den Prädiktionsvektor 12 auf die erwarteten Längen zu bringen. Dabei ist es vorteilhaft, wenn der Faktor zum Skalieren der Flussvektoren gleich dem Quotient q gewählt ist.

Diese Prädiktion unterstützt die Bestimmung des nächsten Flussfelds zwischen den Zeitpunkten $t_2$ und $t_3$. Den Zeitpunkt $t_2$ haben die beiden Flussfelder also gemeinsam: Die Flussvektoren des ersten Flussfelds enden dort, die des zweiten beginnen dort. Daher ist es von weiterem Vorteil, wenn das zu bestimmende

Flussfeld zwischen $t_2$ und $t_3$ zunächst ein Vorwärtsfluss ist. Diese Serie von Bildern kann weiter fortgesetzt werden, indem man ein weiteres Bild hinzunimmt, das dem Zeitpunkt $t_4$ zugeordnet ist mit $t_4 > t_3$.

Dann kann das Flussfeld zwischen $t_2$ und $t_3$ als Prädiktor verwendet werden und die nächste Bestimmung des Flussfelds zwischen den Zeitpunkten $t_3$ und $t_4$ unterstützen (gemeinsamer Zeitpunkt $t_3$), und so weiter. Dabei werden aus dem Flussfeld zwischen $t_2$ und $t_3$ die entsprechenden Prädiktionsvektoren 12 ausgelesen.

Pro Flussvektor-Hypothese und somit für jeden Hypothesenvektor 13 wird eine Verknüpfungsprüfung durchgeführt, wobei die Hypothese, also der Hypothesenvektor 13, mit der jeweiligen Prädiktion, also dem Prädiktionsvektor 12, hinsichtlich Orientierung und Länge verglichen wird. Es werden somit Verknüpfungskosten basierend auf einem Unterschied zwischen dem Prädiktionsvektor 12 und dem Hypothesenvektor 13 berechnet, wobei die Verknüpfungskosten einen Ähnlichkeitsgrad zwischen dem Prädiktionsvektor 12 und dem Hypothesenvektor 13 angeben. Dabei beschreiben hohe Verknüpfungskosten einen geringen Ähnlichkeitsgrad und geringe Verknüpfungskosten einen hohen Ähnlichkeitsgrad. Es erfolgt somit ein Berechnen eines Ähnlichkeitsgrads zwischen dem Prädiktionsvektor 12 und dem Hypothesenvektor 13 basierend auf einem Unterschied zwischen dem Prädiktionsvektor 12 und dem Hypothesenvektor 13.

Bei dem Berechnen der Verknüpfungskosten erfolgt optional eine Anpassung des Prädiktionsvektors 12, durch welchen eine Kamerabewegung zwischen einem Erfassen des ersten Bildes 1 und des zweiten Bildes 2 kompensiert wird und/oder eine Kamerabewegung zwischen einem Erfassen des zweiten Bildes 2 und des dritten Bildes 3 kompensiert wird. Dazu wird beispielsweise die Änderung der Kamerabewegung mittels einer Sensorik oder Bildauswertung erfasst und die daraus hervorgerufene Änderung der Bewegung am jeweiligen Bildpunkt ermittelt und auf den ersten Flussvektor 10 addiert, um den Prädiktionsvektor 12 zu ermitteln.

Der Prädiktionsvektor 12 und der Hypothesenvektor 13 werden als "verknüpft" oder "verkettet" betrachtet, weil sie anschaulich gesprochen zusammenpassen. Diese Eigenschaft erhöht das Vertrauen in die somit bestätigte Flussvektor-Hypothese und kann als Gütemaß oder Güteattribut an den jeweiligen Flussvektor angehängt werden. Es wird somit eine Plausibilität der Flussvektor-Hypothese erhöht. Bei der Verknüpfungsprüfung werden der Prädiktionsvektor 12 und der Hypothesenvektor 13 des Merkmals 4 als miteinander verknüpft angesehen, wenn der Ähnlichkeitsgrad zwischen dem Prädiktionsvektor 12 und dem Hypothesenvektor 13 ein vorgegebenes Maß überschreitet, also wenn die Verknüpfungskosten ein vorgegebenes Maß unterschreiten. Werden der Prädiktionsvektor 12 und der Hypothesenvektor 13 als miteinander verknüpft angesehen, so wird dies als eine Information dem Hypothesenvektor 13 zugeordnet.

Wird der Hypothesenvektor 13 in einem späteren Verlauf des Verfahrens, beispielsweise bei einem Erzeugen eines dem Merkmal 4 zugehörigen Prädiktionsvektors 12 basierend auf einer Bewegung des Merkmals 4 zwischen dem zweiten Bild 2 und dem dritten Bild 3, so kann diese Information für das Bewerten der Plausibilität in dem späteren Verlauf des Verfahrens herangezogen werden. In diesem Falle erfolgt somit das Bewerten der Plausibilität des Hypothesenvektors 13 basierend darauf, ob in einem oder mehreren vorangegangenen Schleifendurchläufen der Prädiktionsvektor 12 und der Hypothesenvektor 13 des Merkmals 4 als miteinander verknüpft angesehen wurden.

Wenn diese Verknüpfungsprüfung zeitlich mehrfach nacheinander erfolgreich ist, reicht die Bestätigung entsprechend weit in die Vergangenheit zurück. Es wird dabei vom Alter des Flussvektors oder des Hypothesenvektors 13 gesprochen, wobei damit die Anzahl der ununterbrochen erfolgreichen Verknüpfungsprüfungen gemeint ist. Das so gebildete Alter stellt seinerseits wieder ein Güteattribut dar, dass als Zahl dargestellt werden und dem jeweiligen Flussvektor angehängt werden kann.

Das Verfahren wird in einer Schleife ausgeführt, wodurch eine Alterung von Flussvektoren möglich wird, welche einem Merkmal 4 zugehörig sind. Dabei werden der Hypothesenvektor 13 und der Prädiktionsvektor 12 für das Merkmal 4 in einem aktuellen Schleifendurchlauf als miteinander verknüpft betrachtet, wenn das Berechnen der Verknüpfungskosten einen Grad einer Ähnlichkeit zwischen dem Prädiktionsvektor 12 und dem Hypothesenvektor 13 anzeigt, der größer als ein vorgegebener Grad ist und/oder es keinen alternativen Hypothesenvektor gibt, für den ein noch höherer Grad der Ähnlichkeit vorliegt. Die Plausibilität einer Flussvektor-Hypothese eines auf den aktuellen Schleifendurchlauf folgenden Schleifendurchlaufs wird zusätzlich erhöht, wenn der Hypothesenvektor 13 und der Prädiktionsvektor 12 für das Merkmal 4 in dem aktuellen Schleifendurchlauf bereits als miteinander verknüpft betrachtet werden.

Man könnte somit auch von einer Verkettung sprechen (selbst wenn diese nicht explizit als solche gespeichert wird). Das so gebildete Alter kann als Qualitätskriterium genutzt werden, um gute Flussvektoren herauszufiltern bzw. Ausreißer zu eliminieren. Es können bereits mit einer Schwelle "Alter $\geq$ 1" die meisten Ausreißer eliminiert werden. Mit einer höheren Schwelle wird die Trennung noch besser, allerdings steigt mit der Höhe der Schwelle selbstverständlich auch die Wartezeit (im Sinne Anzahl Bilder), bis ein neuer Hypothesenvektor 13 (ohne Vorgänger) die Schwelle erstmals erreichen kann.

Des Weiteren ergibt sich eine sinnvolle Möglichkeit, weitere Informationen mittels des Flussfelds von Bild zu Bild weiter zu transportieren, wenn die Verknüpfungsprüfung am jeweiligen Merkmal 4 erfolgreich war. Beispielsweise kann das zweite Bild 2 von Zeitpunkt $t_2$ bereits mit einer Label-Information versehen sein, z. B. einer semantischen Segmentierung, die zu jedem Merkmal 4 angibt, mit welcher Wahrscheinlichkeit das jeweilige Pixel einer bestimmten Objektklasse angehört (z. B. Fußgänger, Auto, Fahrrad, Gebäude, Straße, Bordstein, Bürgersteig, Leitplanke, Verkehrszeichen, Vegetation, usw.).

Diese Information kann mittels des zugehöri-

gen Hypothesenvektors 13 (von $t_2$ nach $t_3$) weitergereicht werden. Somit kommt diese Information dann an der richtigen Koordinate an. Somit wird eine Information mit dem Merkmal 4 verknüpft, welche angibt, dass das der Flussvektor-Hypothese zugehörige Merkmal 4 ein Objekt einer bestimmten Objektklasse darstellt.

Dieses Weiterreichen einer Information bzw. eines Attributs ist insbesondere dann sinnvoll, wenn die Verknüpfungsprüfung erfolgreich war, denn dann liegt ein zeitlich konsistentes und physikalisch plausibles Verhalten vor. Dann ist die Wahrscheinlichkeit also hoch, dass das Weiterreichen korrekt war und die Zusatzinformation anschließend noch richtig zugeordnet ist.

Nachfolgend wird eine bevorzugte Möglichkeit für die Verknüpfungsprüfung und das Berechnen des Ähnlichkeitsgrades beschrieben. Dabei werden die Verknüpfungskosten für eine Verknüpfung ermittelt, wobei sich die Verknüpfungskosten aus einem orthogonalen Anteil und einem longitudinalen Anteil zusammensetzen. Der den Verknüpfungskosten zugrundeliegende Unterschied wird dabei mittels zweier Vektorkomponenten 22, 23 eines Differenzvektors 21 ermittelt. Eine erste Vektorkomponente 22 beschreibt dabei den orthogonalen Anteil und eine zweite Vektorkomponente 22 beschreibt dabei den longitudinalen Anteil. Die Vektorkomponenten 22, 23 stehen definitionsgemäß senkrecht aufeinander.

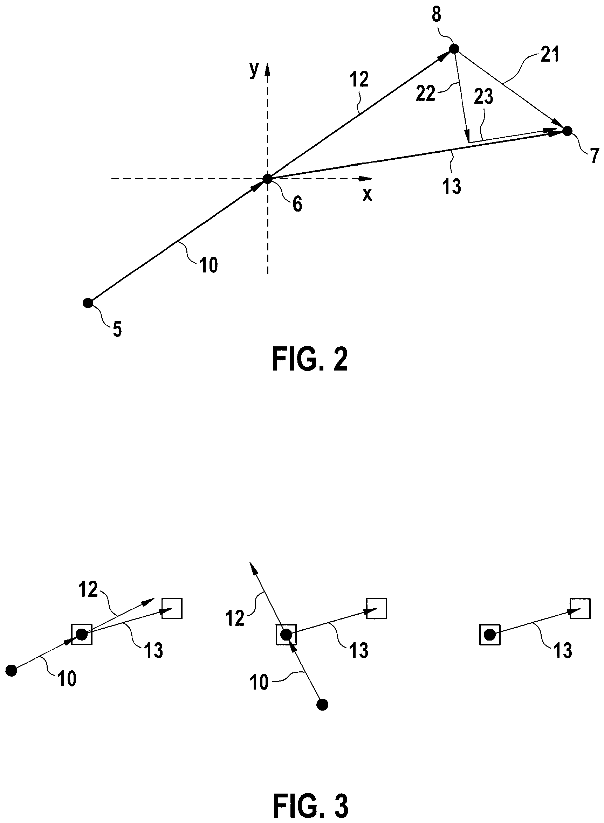

Der Zusammenhang zwischen Prädiktionsvektor 12 und dem Hypothesenvektor 13 ist in Figur 2 beispielhaft dargestellt. So ist in Figur 2 der erste Flussvektor 10 dargestellt. Dieser beschreibt die Bewegung des Merkmals 4 zwischen der ersten Position 5 und der zweiten Position 6. Diese Bewegung des Merkmals 4 erfolgt zwischen dem ersten Bild 1 und dem zweiten Bild 2. Aus dieser Bewegung zwischen dem ersten Bild 1 und dem zweiten Bild 2 und somit basierend auf dem ersten Flussvektor 10 wird der Prädiktionsvektor 12 ermittelt. Der Prädiktionsvektor 12 ist dabei gleich dem ersten Flussvektor 10. Dem liegt die Annahme zugrunde, dass das Merkmal 4 sich bei einer konstanten Bewegung in dem dritten Bild 3 an einer theoretischen Position 8 befinden müsste.

In dem in Figur 2 dargestellten Beispiel wird ferner durch eine Bildanalyse der Hypothesenvektor 13 errechnet. Es wird somit die Flussvektor-Hypothese aufgestellt, dass das Merkmal 4 sich zwischen dem zweiten Bild 2 und dem dritten Bild 3 zu der dritten Position 7 bewegt hat. Dies wird durch den Hypothesenvektor 13 beschrieben.

Liegt bereits ein Flussfeld vor, so wird der Hypothesenvektor aus dem Flussfeld ermittelt. Das Flussfeld beschreibt dabei bevorzugt einen Vorwärtsfluss. Um zu bewerten, ob diese Flussvektor-Hypothese und somit der Hypothesenvektor 13 plausibel ist, werden nun die Verknüpfungskosten berechnet. Dazu wird der Differenzvektor 21 aus der Differenz zwischen dem Hypothesenvektor 13 und dem Prädiktionsvektor 12 errechnet. In einem einfachen Fall ist der Unterschied gleich einem Betrag des Differenzvektors 21, wobei ein Wert dieses Betrags direkt als ein Wert für die Verknüpfungskosten angesehen wird.

Der den Verknüpfungskosten zugrundeliegende Unterschied wird in der hier beschriebenen Ausführungsform jedoch mittels der Vektorkomponenten 22, 23 des Differenzvektors 21 ermittelt. Der orthogonale Anteil, also die senkrecht auf dem Hypothesenvektors 13 stehende erste Vektorkomponente 22, stellt ein Maß für die Abweichung von einer Orientierung dar, wobei als Bezugs Orientierung die Orientierung des Hypothesenvektors 13 verwendet wird. Alternativ könnte auch die Orientierung des Prädiktionsvektors 12 als Bezug dienen. Der longitudinale Anteil, also die zweite Vektorkomponente 23 und somit die parallel zu dem Hypothesenvektors 13 liegende zweite Vektorkomponente 23, misst die Abweichung in Richtung des Bezugsvektors bzw. in Gegenrichtung. Anschaulich wird also die Verlängerung oder Verkürzung des Hypothesenvektors 13 gegenüber dem Prädiktionsvektor 12 gemessen, wobei für diese beiden Fälle i. allg. unterschiedliche Maßstäbe angelegt werden.

Entspricht der Bezugsvektor dem Nullvektor, ist keine Orientierung definiert. Für diesen Fall ist eine Sonderbehandlung sinnvoll.

Der orthogonale und der longitudinale Anteil der Verknüpfungskosten, die beide nichtnegativ sind, werden dann kombiniert, z. B. im Sinne einer Norm. Dabei können die Anteile auch gewichtet werden.

Jedoch soll für die Bewertung des orthogonalen Anteils in diesem Ausführungsbeispiel ein strengerer Maßstab angelegt werden als beim longitudinalen Anteil, denn die orthogonale Abweichung ist nur durch eine Richtungsänderung des Objekts oder eine Rotation der Kamera zu erklären, während der longitudinale Anteil sich zusätzlich auch schon dadurch ändert, dass das Objekt sich der Kamera annähert oder von der Kamera entfernt. Daher kann eine longitudinale Änderung innerhalb eines vorgegebenen Intervalls großzügig bewertet werden, z. B. indem dadurch keine Verknüpfungskosten entstehen. Auf diese Weise erfolgt eine unterschiedliche Gewichtung der beiden Vektorkomponenten 22, 23.

Die Verknüpfungskosten sind ein Maß für den Unterschied zwischen dem Prädiktionsvektor 12 und dem Hypothesenvektor 13. Beispielhafte Kombinationen des Prädiktionsvektors 12 und des Hypothesenvektors 13 sind in Figur 3 dargestellt. So sind die Verknüpfungskosten gleich Null, wenn der Prädiktionsvektors 12 und der Hypothesenvektor 13 identisch sind. In Figur 3 ist ganz links ein Beispiel gezeigt, in dem der Prädiktionsvektors 12 und der Hypothesenvektor 13 einander ähnlich sind und geringe Verknüpfungskosten entstehen. In Figur 3 ist mittig ein Beispiel gezeigt, in dem der Prädiktionsvektor 12 und der Hypothesenvektor 13 einander unähnlich sind und hohe Verknüpfungskosten entstehen. Ferner ist Figur 3 rechts ein Beispiel gezeigt, in dem kein Prädiktionsvektors 12 vorliegt und somit keine Verknüpfungskosten berechnet werden können.

Um einen ermittelten Unterschied zwischen dem Prädiktionsvektor 12 und dem Hypothesenvektor 13 in die Verknüpfungskosten umzusetzen, werden die Verknüpfungskosten mittels einer vorgegebenen Funktion aus dem Unterschied zwischen dem Prädiktionsvektor und dem Hypothesenvektor ermittelt. Dabei kann durch die vorgegebene Funktion eine Gewichtung des Unterschieds zwischen dem Prädiktionsvektor und dem Hypothesenvektor erfolgen. Dabei ist die Funktion insbesondere eine Funktion, welche abhängig von einem Betrag der ersten Vektorkomponente 22 und einem Betrag der zweiten Vektorkomponente 23 ist.

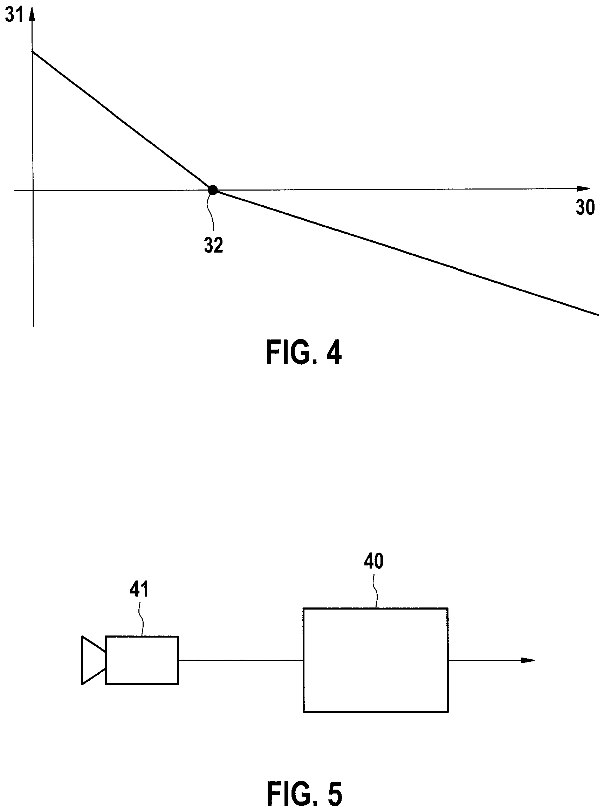

Die Verknüpfungskosten können anschließend abgebildet werden, um sie in eine besser nutzbare Form zu überführen, beispielsweise mit einer nichtlinearen Funktion. Eine solche nichtlineare Funktion ist beispielhaft in Figur 4 gezeigt. Diese ist stückweise linear und bildet nichtnegative Verknüpfungskosten auf vorzeichenbehaftete Werte ab, die nachfolgend Gewichte genannt werden. Die Funktion kann wertekontinuierlich oder wertdiskret sein. Die Idee ist hier, dass "gute Flussvektor-Hypothesen", also solche, die geringe Verknüpfungskosten aufweisen, aufgewertet werden, indem ein positives Gewicht hinzuaddiert wird, während Flussvektor-Hypothesen mit hohen Verknüpfungskosten herabgewichtet werden. Die Verknüpfungskosten sind über eine erste Achse 30 dargestellt, die Gewichtung ist über eine zweite Achse 31 dargestellt. An einem Neutralpunkt 32 geht die Gewichtung von einer positiven Gewichtung in eine negative Gewichtung über.

In Figur 4 haben die beiden Achsenabschnitte unterschiedliche Steigungen und schneiden sich in einem Punkt. Hier liegt der Schnittpunkt auf der Abszisse. Dieser Schnittpunkt wird Neutralpunkt 32 genannt und stellt einen ausgezeichneten Punkt dar: Am Neutralpunkt ist das additive Gewicht gerade Null, und damit so groß wie bei einer Flussvektor-Hypothese, für die keine Prädiktion existiert. Mit diesem Konzept der vorzeichenbehafteten additiven Gewichte ist es also problemlos möglich, den in der Praxis wichtigen Umstand zu berücksichtigen, dass für einzelne oder viele oder manchmal alle Flussvektor- Hypothesen keine Prädiktion vorhanden ist.

Das additive Gewicht kann zu einem bereits existierenden Gewicht hinzuaddiert werden, mit dem die Flussvektor-Hypothese aus hier nicht näher beschriebenen Gründen bereits versehen sein kann. Auch andere Lösungen der Berücksichtigung anstelle der Addition von Gewichten sind möglich.

Die Verknüpfungskosten oder Abbildungen davon (z. B. nach nichtlinearer Abbildung) können mit einem oder mehreren Schwellwerten verglichen werden, um den Wertebereich auf eine kleine Zahl von Ersatzwerten abzubilden. Dieser Schritt der linearen oder nichtlinearen Quantisierung kann ein binäres oder ein mehr als binärwertiges Ergebnis haben.

Im Falle der binären Entscheidung kann diese unmittelbar dem Verwerfen oder Akzeptieren einer Flussvektor-Hypothese entsprechen. Es erfolgt somit das Bewerten einer Plausibilität der Flussvektor-Hypothese und des zugehörigen Hypothesenvektors 13 basierend auf den errechneten Verknüpfungskosten und somit basierend auf dem errechneten Ähnlichkeitsgrad.

Stehen mehr als 2 Ersatzwerte zur Verfügung, beispielsweise 4, so können diese folgende Interpretation haben:

0: Prädiktion und Flussvektor-Hypothese widersprechen sich, die Flussvektor-Hypothese und somit der Hypothesenvektor 13 wird verworfen.

1: Prädiktion und Flussvektor-Hypothese stimmen nicht gut miteinander überein, aber noch im Rahmen der Toleranz. Misstrauen bei der Weiterverarbeitung der Flussvektor-Hypothese und des Hypothesenvektors 13 ist angebracht.

2: Prädiktion und Flussvektor-Hypothese stimmen gut überein, die Flussvektor-Hypothese und somit der Hypothesenvektor 13 kann normal weiterverwendet werden.

3: Prädiktion und Flussvektor-Hypothese stimmen besonders gut überein oder sind sogar identisch, die Flussvektor-Hypothese und somit der Hypothesenvektor 13 kann für spezielle Zwecke verwendet werden.

Durch die zuvor beschriebenen Werte 1 bis 4 wird die Plausibilität der Flussvektor-Hypothese und somit des zugehörigen Hypothesenvektors 13 beschrieben. Es ist ersichtlich, dass die Plausibilität höher bewertet wird, wenn die Verknüpfungskosten einen ersten Ähnlichkeitsgrad angeben als wenn die Verknüpfungskosten einen zweiten Ähnlichkeitsgrad angeben, wobei der erste Ähnlichkeitsgrad größer ist als der zweite Ähnlichkeitsgrad. Die Plausibilität wird also höher bewertet, wenn Prädiktion und Flussvektor-Hypothese einander nicht widersprechen. Die Plausibilität wird niedriger bewertet, wenn Prädiktion und Flussvektor-Hypothese einander widersprechen. Ob die Prädiktion und Flussvektor-Hypothese einander widersprechen, ergibt sich aus den Verknüpfungskosten.

Typischerweise werden bei dem Erzeugen des dem Merkmal 4 zugehörigen Hypothesenvektors 13 mehrere dem Merkmal 4 zugehörige Hypothesenvektoren erzeugt. In diesem Falle erfolgt das Berechnen des Ähnlichkeitsgrads und das Bewerten der Plausibilität für jeden der Hypothesenvektoren 13. Somit werden für jeden der dem Merkmal 4 zugehörigen Hypothesenvektoren 13 Verknüpfungskosten berechnet, welche den Ähnlichkeitsgrad des jeweiligen Hypothesenvektors 13 mit dem Prädiktionsvektor 12 beschreiben. Bei dem Bewerten der Plausibilität der einzelnen Hypothesenvektoren 13 wird jedem der Hypothesenvektoren 13 einer der zuvor beschriebenen Werte 1 bis 4 zugeordnet. Dabei wird bevorzugt derjenige der dem Merkmal 4 zugehörigen Hypothesenvektoren 13 für eine weitere Verarbeitung ausgewählt, beispielsweise in ein Flussfeld übernommen, welchem der höchste Wert zugeordnet wurde.

Allgemein gesagt wird somit derjenige der dem Merkmal 4 zugehörigen Hypothesenvektoren 13 für eine weitere Verarbeitung ausgewählt, welcher bei dem Bewerten der Plausibilität die höchste Plausibilität aufweist. So wird die Plausibilität für jeden Hypothesenvektor 13 ausgehend von einem vorgegebenen Ausgangswert abhängig von den Verknüpfungskosten und somit Abhängig von dem zugehörigen Ähnlichkeitsgrad erhöht oder gesenkt. Dabei wird die Plausibilität bei einem hohen Ähnlichkeitsgrad und geringen Verknüpfungskosten erhöht. Entsprechend wird die Plausibilität bei einem niedrigen Ähnlichkeitsgrad und hohen Verknüpfungskosten verringert. Der Grad einer Änderung der Plausibilität kann dabei beispielsweise abhängig von den Verknüpfungskosten sein. Wurde die Plausibilität bewertet, so wird derjenige der dem Merkmal 4 zugehörigen Hypothesenvektoren 13 für eine weitere Verarbeitung ausgewählt, beispielsweise in ein Flussfeld übernommen, welcher nach dem Bewerten der Plausibilität die höchste Plausibilität aufweist.

Das Ergebnis des Vergleichs der Flussvektor-Hypothese mit der Prädiktion kann ein Gütemaß sein, das als Zusatzinformation codiert (hier mit 2 bit) und gespeichert, weitergegeben oder weiterverarbeitet werden kann.

Besonders vorteilhaft ist eine zeitliche Aggregation solcher Gütemaße. Dazu wird beispielsweise pro Flussvektor das bei der Verknüpfungsprüfung ermittelte Gütemaß mit einem Attribut des Flussvektors "verrechnet", beispielsweise addiert. Ein solches Attribut könnte beispielsweise das bereits genannte Alter sein: Das Gütemaß wäre in diesem Falle binär und die Addition könnte so lange erfolgen, bis ein maximal darstellbares Alter erreicht ist. Auch eine Aggregation von mehr als binärwertigen Signalen über die Zeit ist sinnvoll. Dieses Attribut wäre dann aber nicht mehr unmittelbar als Alter interpretierbar.

Erfindungsgemäß wird somit eine Robustheit gegen Ausreißer erheblich verbessert. Ausreißer beim optischen Fluss sind fehlerhafte Korrespondenzzuordnungen, die z. B. auftreten können, wenn sich Strukturen in der Szene wiederholen.

Mit dem erfindungsgemäßen Vergleich von Flussvektor-Hypothesen zur Prädiktion werden Flussvektor-Hypothesen bevorzugt, die sich gemäß der Erwartung verhalten und Ausreißer-Hypothesen, die sich nicht so verhalten, wirksam unterdrückt. Außerdem wird als Zusatzinformation ein Maß für die zeitliche Konsistenz gewonnen und mittels der Flussvektoren zeitlich weitertransportiert.

Dieser Transportweg kann auch für andere Informationen benutzt werden.

Die Idee der Fluss-Prädiktion zur Bewertung von Flussvektor-Hypothesen und für den Transport von Attributen kann sowohl beim nicht dichten optischen Fluss (sparse optical flow) eingesetzt werden, bei dem nur für wenige ausgezeichnete Bildpunkte die Bewegung ermittelt wird, als auch für dichten optischen Fluss, bei dem für jeden Bildpunkt oder einen großen Anteil der Bildpunkte die Bewegung ermittelt wird.

Ein Beispiel für ein solches Attribut ist das "Alter" eines Flussvektors. Dies kann z. B. die Anzahl der aufeinanderfolgend erfolgreichen Bestätigungen anhand des Vergleichs mit der jeweiligen Prädiktion sein und stellt somit ein Gütemaß oder Vertrauensmaß dar.

Es erfolgt somit eine Nutzung einer optischen Fluss-Prädiktion zur Plausibilisierung oder Deplausibilisierung von Flussvektor-Hypothesen, z. B. zur Elimination falscher Korrespondenzen (Ausreißer) oder zur Aufwertung von durch die Prädiktion bestätigten Korrespondenzen oder zur Abwertung von durch die Prädiktion nicht bestätigten Korrespondenzen.

Zudem erfolgt eine Verknüpfungsprüfung zwischen Prädiktionsvektor und Hypothesenvektor mit Erzeugung einer Bewertung.

Dabei erfolgt eine Zerlegung bei der Verknüpfungsprüfung in eine Prüfung der Abweichung von einer Orientierung und eine Prüfung der Abweichung entlang der Orientierung. Dies erfolgt ggf. mit gewichteter Kombination der Anteile.

Abweichungen entlang der Orientierung innerhalb eines vorbestimmten Intervalls können zugelassen werden. Dabei erfolgt eine unterschiedliche Behandlung je nach dem, ob der Hypothesenvektor 13 länger oder kürzer (entlang der Orientierung) als der Prädiktionsvektor 12 ist.

Die Prädiktion erfolgt bevorzugt als Rückwärtsfluss in Kombination mit Flusshypothesen als Vorwärtsfluss. Zudem erfolgt die Bildung eines Maßes für die zeitliche Konsistenz eines Flussvektors (im Zusammenhang mit der über die Prädiktion eingespeiste Vorgeschichte), z. B. als Alters-Attribut. Auch erfolgt eine Bereitstellung von mittels der Verknüpfungsprüfung erzeugten oder bestätigten oder fortgeschriebenen Attributen an einer Schnittstelle und ein Transport eines beliebigen Attributs über die Zeit, z. B. jeweils angehängt an einen Flussvektor, in Abhängigkeit von einer Verknüpfungsprüfung.

Bevorzugt erfolgt eine Nutzung von Parametern zur Anpassung der Prädiktion, z.B. um unterschiedlich große Zeitabstände oder Streckenabschnitte zu berücksichtigen oder um eine Eigenbewegung der Kamera zu kompensieren.

In Figur 5 ist eine Vorrichtung zum Plausibilisieren einer Flussvektor-Hypothese dargestellt. Diese umfasst eine Recheneinheit 40, welche dazu eingerichtet ist, das zuvor beschriebene Verfahren auszuführen. Dabei werden die Bilder 1, 2, 3 mittels einer Kamera 41 bereitgestellt. Es sei jedoch darauf hingewiesen, dass die Bilder 1, 2, 3 auch mittels einer alternativen Quelle bereitgestellt werden können, beispielsweise mittels eines Speichermediums.

Neben der obigen schriftlichen Offenbarung wird explizit auf die Offenbarung der Figuren 1 bis 4 verwiesen.

**Patentansprüche**

1. Rechner-implementiertes Verfahren zur Plausibilisierung einer Flussvektor-Hypothese, umfassend

   - Ermitteln eines einem Merkmal (4) zugehörigen Prädiktionsvektors (12) basierend auf einer Bewegung des Merkmals (4) zwischen einem ersten Bild (1) und einem zweiten Bild (2), wobei das zweite Bild (2) ein auf das erste Bild (1) folgendes Bild in einer Abfolge von Bildern (20) ist,
   - Erzeugen eines dem Merkmal (4) zugehörigen Hypothesenvektors (13), welcher eine vermutliche Bewegung des Merkmals (4) zwischen dem zweiten Bild (2) und einem dritten Bild (3) beschreibt, wobei das dritte Bild (3) ein auf das zweite Bild (2) folgendes Bild in einer Abfolge von Bildern (20) ist,
   - Berechnen eines Ähnlichkeitsgrads zwischen dem Prädiktionsvektor (12) und dem Hypothesenvektor (13) basierend auf einem Unterschied zwischen dem Prädiktionsvektor (12) und dem Hypothesenvektor (13), wobei bei dem Berechnen des Ähnlichkeitsgrads zwischen dem Prädiktionsvektor (12) und dem Hypothesenvektor (13) eine Abweichung in orthogonaler Richtung gegenüber dem Prädiktionsvektor (12) strenger bewertet wird als eine Abweichung in longitudinaler Richtung gegenüber dem Prädiktionsvektor (12), oder eine Abweichung in orthogonaler Richtung gegenüber dem Hypothesenvektor (13) strenger bewertet wird als eine Abweichung in longitudinaler Richtung gegenüber dem Hypothesenvektor (13), und
   - Bewerten einer Plausibilität des Hypothesenvektors (13) basierend auf dem errechneten Ähnlichkeitsgrad, wobei bewertet wird, ob der Hypothesenvektor (13) eine tatsächliche Bewegung des Merkmals (4) zwischen dem zweiten Bild (2) und dem dritten Bild (3) beschreibt, **dadurch gekennzeichnet, dass**
   - bei dem Berechnen des Ähnlichkeitsgrades der Unterschied mittels eines Differenzvektors (21) ermittelt wird, welcher durch ein Bilden einer Differenz aus dem Prädiktionsvektor (12) und dem Hypothesenvektor (13) erzeugt wird, wobei der Unterschied mittels zweier Vektorkomponenten (22, 23) des Differenzvektors (21) ermittelt wird, die ein Maß für die Abweichung in orthogonaler Richtung und ein Maß für die Abweichung in longitudinaler Richtung darstellen, wobei eine unterschiedliche Gewichtung der beiden Vektorkomponenten (22, 23) erfolgt.

2. Verfahren gemäß Anspruch 1, **dadurch gekennzeichnet, dass** das Verfahren in einer Schleife ausgeführt wird, wobei in einem aktuellen Schleifendurchlauf dem Hypothesenvektor (13) des Merkmals (4) eine Information zugeordnet wird, welche auf einer Information basiert, die dem Hypothesenvektor (13) des Merkmals (4) in einem vorangegangenen Schleifendurchlauf zugeordnet ist.

3. Verfahren gemäß Anspruch 2, **dadurch gekennzeichnet, dass** die dem Hypothesenvektor (13) zugeordnete Information ein Ergebnis einer Verknüpfungsprüfung ist, wobei

   - die Verknüpfungsprüfung in jedem Schleifendurchlauf ausgeführt wird, wobei der Prädiktionsvektor (12) und der Hypothesenvektor (13) des Merkmals (4) bei der Verknüpfungsprüfung als miteinander verknüpft angesehen werden, wenn der Ähnlichkeitsgrad zwischen dem Prädiktionsvektor (12) und dem Hypothesenvektor (13) ein vorgegebenes Maß überschreitet, und
   - in jedem Schleifendurchlauf das Bewerten der Plausibilität des Hypothesenvektors (13) ferner basierend darauf erfolgt, ob in einem oder mehreren vorangegangenen Schleifendurchläufen der Prädiktionsvektor (12) und der Hypothesenvektor (13) des Merkmals (4) als miteinander verknüpft angesehen wurden.

4. Verfahren gemäß Anspruch 2, **dadurch gekennzeichnet, dass** die dem Hypothesenvektor (13) zugeordnete Information eine Objektklasse eines dem Merkmal (4) zugehörigen Objektes beschreibt.

5. Verfahren gemäß Anspruch einem der voranstehenden Ansprüche, **dadurch gekennzeichnet, dass** der Prädiktionsvektor (12) aus einem Flussfeld ermittelt wird, welches einen Rückwärtsfluss beschreibt, und/oder der Hypothesenvektor (13) aus einem Flussfeld ermittelt wird, welches einen Vorwärtsfluss beschreibt.

6. Verfahren gemäß einem der voranstehenden Ansprüche, **dadurch gekennzeichnet, dass** bei dem Berechnen des Ähnlichkeitsgrades eine Anpassung des Prädiktionsvektors (12) erfolgt, durch welchen eine Kamerabewegung zwischen einem Erfassen des ersten Bildes (1) und des zweiten Bildes (2) kompensiert wird und/oder eine Kamerabewegung zwischen einem Erfassen des zweiten Bildes (2) und des dritten Bildes (3) kompensiert wird.

7. Verfahren gemäß einem der voranstehenden Ansprüche, **dadurch gekennzeichnet, dass** der Ähnlichkeitsgrad mittels einer vorgegebenen Funktion aus dem Unterschied zwischen dem Prädiktionsvektor (12) und dem Hypothesenvektor (13) ermittelt wird, wobei durch die vorgegebene Funktion insbesondere eine Gewichtung des Unterschieds zwischen dem Prädiktionsvektor (12) und dem Hypothesenvektor (13) erfolgt.

8. Verfahren gemäß einem der voranstehenden Ansprüche, **dadurch gekennzeichnet, dass** bei dem Erzeugen eines dem Merkmal (4) zugehörigen Hypothesenvektors (13) mehrere dem Merkmal (4) zugehörige Hypothesenvektoren erzeugt werden und das Berechnen des Ähnlichkeitsgrads und das Bewerten der Plausibilität für jeden der Hypothesenvektoren (13) erfolgt.

9. Vorrichtung zur Plausibilisierung einer Flussvektor-Hypothese, umfassend eine Recheneinheit (40), welche dazu eingerichtet ist:

   - einen einem Merkmal (4) zugehörigen Prädiktionsvektor (12) basierend auf einer Bewegung des Merkmals (4) zwischen einem ersten Bild (1) und einem zweiten Bild (2) zu ermitteln, wobei das zweite Bild (2) ein auf das erste Bild (1) folgendes Bild in einer Abfolge von Bildern (20) ist,
   - einen dem Merkmal (4) zugehörigen Hypothesenvektor (13) zu erzeugen, welcher eine vermutliche Bewegung des Merkmals (4) zwischen dem zweiten Bild (2) und einem dritten Bild (3) beschreibt, wobei das dritte Bild (3) ein auf das zweite Bild (2) folgendes Bild in einer Abfolge von Bildern (20) ist,
   - einen Ähnlichkeitsgrad zwischen dem Prädiktionsvektor (12) und dem Hypothesenvektor (13) basierend auf einem Unterschied zwischen dem Prädiktionsvektor (12) und dem Hypothesenvektor (13) zu errechnen, wobei bei dem Berechnen des Ähnlichkeitsgrads zwischen dem Prädiktionsvektor (12) und dem Hypothesenvektor (13) eine Abweichung in orthogonaler Richtung gegenüber dem Prädiktionsvektor (12) strenger bewertet wird als eine Abweichung in longitudinaler Richtung gegenüber dem Prädiktionsvektor (12), oder eine Abweichung in orthogonaler Richtung gegenüber dem Hypothesenvektor (13) strenger bewertet wird als eine Abweichung in longitudinaler Richtung gegenüber dem Hypothesenvektor (13), und
   - eine Plausibilität des Hypothesenvektors (13) basierend auf dem errechneten Ähnlichkeitsgrad zu bewerten, wobei bewertet wird, ob der Hypothesenvektor (13) eine tatsächliche Bewegung des Merkmals (4) zwischen dem zweiten Bild (2) und dem dritten Bild (3) beschreibt,

   **dadurch gekennzeichnet, dass** die Recheneinheit (40) dazu eingerichtet ist, bei dem Berechnen des Ähnlichkeitsgrades den Unterschied mittels eines Differenzvektors (21) zu ermitteln, welcher durch ein Bilden einer Differenz aus dem Prädiktionsvektor (12) und dem Hypothesenvektor (13) erzeugt wird, wobei der Unterschied mittels zweier Vektorkomponenten (22, 23) des Differenzvektors (21) ermittelt wird, die ein Maß für die Abweichung in orthogonaler Richtung und ein Maß für die Abweichung in longitudinaler Richtung darstellen, wobei eine unterschiedliche Gewichtung der beiden Vektorkomponenten (22, 23) erfolgt.

## Claims

1. Computer-implemented method for checking the plausibility of a flow-vector hypothesis, comprising:

   - determining a prediction vector (12), associated with a feature (4), based on a movement of the feature (4) between a first image (1) and a second image (2), wherein the second image (2) is an image following the first image (1) in a sequence of images (20),
   - generating a hypothesis vector (13), which is associated with the feature (4) and describes a probable movement of the feature (4) between the second image (2) and a third image (3), wherein the third image (3) is an image following the second image (2) in a sequence of images (20),
   - calculating a degree of similarity between the prediction vector (12) and the hypothesis vector (13) based on a difference between the prediction vector (12) and the hypothesis vector (13), wherein, when calculating the degree of similarity between the prediction vector (12) and the hypothesis vector (13), a deviation in the orthogonal direction with respect to the prediction vector (12) is evaluated more strictly than a deviation in the longitudinal direction with respect to the prediction vector (12), or a deviation in the orthogonal direction with respect to the hypothesis vector (13) is evaluated more strictly than a deviation in the longitudinal direction with respect to the hypothesis vector (13), and
   - evaluating a plausibility of the hypothesis vector (13) based on the calculated degree of similarity, wherein it is evaluated whether the hypothesis vector (13) describes an actual movement of the feature (4) between the second image (2) and the third image (3),

   **characterized in that**

   - when calculating the degree of similarity, the difference is determined by means of a difference vector (21) which is generated by forming a difference between the prediction vector (12) and the hypothesis vector (13), wherein the difference is determined by means of two vector components (22, 23) of the difference vector (21), which represent a measure of the deviation in the orthogonal direction and a measure of the deviation in the longitudinal direction, wherein the two vector components (22, 23) are differently weighted.

2. Method according to Claim 1, **characterized in that** the method is performed in a loop, wherein, in a current pass through the loop, the hypothesis vector (13) of the feature (4) is assigned information which is based on information that was assigned to the hypothesis vector (13) of the feature (4) in a previous pass through the loop.

3. Method according to Claim 2, **characterized in that** the information assigned to the hypothesis vector (13) is a result of a linkage check, wherein

    - the linkage check is performed in each pass through the loop, wherein the prediction vector (12) and the hypothesis vector (13) of the feature (4) are considered to be linked to one another in the linkage check if the degree of similarity between the prediction vector (12) and the hypothesis vector (13) exceeds a specified amount, and
    - in each pass through the loop, the evaluation of the plausibility of the hypothesis vector (13) is also based on whether the prediction vector (12) and the hypothesis vector (13) of the feature (4) were considered to be linked to one another in one or more previous passes through the loop.

4. Method according to Claim 2, **characterized in that** the information assigned to the hypothesis vector (13) describes an object class of an object associated with the feature (4).

5. Method according to one of the preceding claims, **characterized in that** the prediction vector (12) is determined from a flow field which describes a backward flow and/or the hypothesis vector (13) is determined from a flow field which describes a forward flow.

6. Method according to one of the preceding claims, **characterized in that**, when calculating the degree of similarity, the prediction vector (12) is adapted to compensate for a camera motion between a recording of the first image (1) and the second image (2) and/or to compensate for a camera motion between a recording of the second image (2) and the third image (3).

7. Method according to one of the preceding claims, **characterized in that** the degree of similarity is determined from the difference between the prediction vector (12) and the hypothesis vector (13) by means of a specified function, wherein the specified function is used in particular for weighting the difference between the prediction vector (12) and the hypothesis vector (13).

8. Method according to one of the preceding claims, **characterized in that**, when generating a hypothesis vector (13) associated with the feature (4), a number of hypothesis vectors associated with the feature (4) are generated and the degree of similarity is calculated for each of the hypothesis vectors (13) and the plausibility is evaluated for each of the hypothesis vectors (13).

9. Device for checking the plausibility of a flow-vector hypothesis, comprising a computing unit (40), which is configured so as:

    - to determine a prediction vector (12), associated with a feature (4), based on a movement of the feature (4) between a first image (1) and a second image (2), wherein the second image (2) is an image following the first image (1) in a sequence of images (20),
    - to generate a hypothesis vector (13), which is associated with the feature (4) and describes a probable movement of the feature (4) between the second image (2) and a third image (3), wherein the third image (3) is an image following the second image (2) in a sequence of images (20),
    - to calculate a degree of similarity between the prediction vector (12) and the hypothesis vector (13) based on a difference between the prediction vector (12) and the hypothesis vector (13), wherein, when calculating the degree of similarity between the prediction vector (12) and the hypothesis vector (13), a deviation in the orthogonal direction with respect to the prediction vector (12) is evaluated more strictly than a deviation in the longitudinal direction with respect to the prediction vector (12), or a deviation in the orthogonal direction with respect to the hypothesis vector (13) is evaluated more strictly than a deviation in the longitudinal direction with respect to the hypothesis vector (13), and
    - to evaluate a plausibility of the hypothesis vector (13) based on the calculated degree of similarity, wherein it is evaluated whether the hypothesis vector (13) describes an actual movement of the feature (4) between the second image (2) and the third image (3),

**characterized in that** the computing unit (40) is configured so as, when calculating the degree of similarity, to determine the difference by means of a difference vector (21) which is generated by forming a difference between the prediction vector (12) and the hypothesis vector (13), wherein the difference is determined by means of two vector components (22, 23) of the difference vector (21), which represent a measure of the deviation in the orthogonal direction and a measure of the deviation in the longitudinal direction, wherein the two vector components (22, 23) are differently weighted.

**Revendications**

1. Procédé mis en œuvre par ordinateur pour la vérification de la plausibilité d'une hypothèse de vecteur de flux, comprenant :

    - détermination d'un vecteur de prédiction (12) appartenant à une caractéristique (4) sur la base d'un mouvement de la caractéristique (4) entre une première image (1) et une deuxième image (2), la deuxième image (2) étant une image qui suit la première image (1) dans une séquence d'images (20),
    - génération d'un vecteur d'hypothèse (13) appartenant à la caractéristique (4), lequel décrit un mouvement supposé de la caractéristique (4) entre la deuxième image (2) et une troisième image (3), la troisième image (3) étant une image qui suit la deuxième image (2) dans une séquence d'images (20),
    - calcul d'un degré de similitude entre le vecteur de prédiction (12) et le vecteur d'hypothèse (13) sur la base d'une différence entre le vecteur de prédiction (12) et le vecteur d'hypothèse (13), un écart dans la direction orthogonale par rapport au vecteur de prédiction (12) étant évalué plus rigoureusement qu'un écart dans la direction longitudinale par rapport au vecteur de prédiction (12) ou un écart dans la direction orthogonale par rapport au vecteur d'hypothèse (13) étant évalué plus rigoureusement qu'un écart dans la direction longitudinale par rapport au vecteur d'hypothèse (13) lors du calcul du degré de similitude entre le vecteur de prédiction (12) et le vecteur d'hypothèse (13), et
    - évaluation d'une plausibilité du vecteur d'hypothèse (13) sur la base du degré de similitude calculé, une évaluation étant effectuée afin de déterminer si le vecteur d'hypothèse (13) décrit un mouvement réel de la caractéristique (4) entre la deuxième image (2) et la troisième image (3),
    **caractérisé en ce que**
    - lors du calcul du degré de similitude, la différence est déterminée au moyen d'un vecteur de différence (21), lequel est généré en formant une différence entre le vecteur de prédiction (12) et le vecteur d'hypothèse (13), la différence étant déterminée au moyen de deux composantes de vecteur (22, 23) du vecteur de différence (21) qui représentent une mesure de l'écart dans la direction orthogonale et une mesure de l'écart dans la direction longitudinale, une pondération différente des deux composantes de vecteur (22, 23) étant effectuée.

2. Procédé selon la revendication 1, **caractérisé en ce que** le procédé est mis en œuvre en boucle, une information étant associée au vecteur d'hypothèse (13) de la caractéristique (4) dans un passage actuel de la boucle, laquelle est basée sur une information qui est associée au vecteur d'hypothèse (13) de la caractéristique (4) dans un passage précédent de la boucle.

3. Procédé selon la revendication 2, **caractérisé en ce que** l'information associée au vecteur d'hypothèse (13) est un résultat d'un contrôle de liaison,

    - le contrôle de liaison étant effectué à chaque passage de boucle, le vecteur de prédiction (12) et le vecteur d'hypothèse (13) de la caractéristique (4) étant considérés comme liés l'un à l'autre lors du contrôle de liaison si le degré de similitude entre le vecteur de prédiction (12) et le vecteur d'hypothèse (13) dépasse une mesure prédéfinie, et
    - dans chaque passage de boucle, l'évaluation de la plausibilité du vecteur d'hypothèse (13) ayant lieu en outre en se basant sur le fait que, dans un ou plusieurs passages de boucle précédents, le vecteur de prédiction (12) et le vecteur d'hypothèse (13) de la caractéristique (4) ont été considérés comme liés l'un à l'autre.

4. Procédé selon la revendication 2, **caractérisé en ce que** l'information associée au vecteur d'hypothèse (13) décrit une classe d'objet d'un objet appartenant à la caractéristique (4).

5. Procédé selon l'une des revendications précédentes, **caractérisé en ce que** le vecteur de prédiction (12) est déterminé à partir d'un champ de flux, lequel décrit un flux vers l'arrière, et/ou le vecteur d'hypothèse (13) est déterminé à partir d'un champ de flux, lequel décrit un flux vers l'avant.

6. Procédé selon l'une des revendications précédentes, **caractérisé en ce que**, lors du calcul du degré de similitude, une adaptation du vecteur de prédiction (12) est effectuée, par laquelle un mouvement de caméra entre une acquisition de la première image (1) et de la deuxième image (2) est compensé et/ou un mouvement de caméra entre une acquisition de la deuxième image (2) et de la troisième image (3) est compensé.

7. Procédé selon l'une des revendications précédentes, **caractérisé en ce que** le degré de similitude est déterminé au moyen d'une fonction prédéfinie à partir de la différence entre le vecteur de prédiction (12) et le vecteur d'hypothèse (13), une pondération de la différence entre le vecteur de prédiction (12) et le vecteur d'hypothèse (13) étant notamment effectuée par la fonction prédéfinie.

8. Procédé selon l'une des revendications précédentes, **caractérisé en ce que**, lors de la génération d'un vecteur d'hypothèse (13) appartenant à la caractéristique (4), plusieurs vecteurs d'hypothèse appartenant à la caractéristique (4) sont générés et le calcul du degré de similitude ainsi que l'évaluation de la plausibilité pour chacun des vecteurs d'hypothèse (13) sont effectués.

9. Dispositif de vérification de la plausibilité d'une hypothèse de vecteur de flux, comprenant une unité de calcul (40), laquelle est conçue pour :

   - déterminer un vecteur de prédiction (12) appartenant à une caractéristique (4) sur la base d'un mouvement de la caractéristique (4) entre une première image (1) et une deuxième image (2), la deuxième image (2) étant une image qui suit la première image (1) dans une séquence d'images (20),
   - générer un vecteur d'hypothèse (13) appartenant à la caractéristique (4), lequel décrit un mouvement supposé de la caractéristique (4) entre la deuxième image (2) et une troisième image (3), la troisième image (3) étant une image qui suit la deuxième image (2) dans une séquence d'images (20),
   - calculer un degré de similitude entre le vecteur de prédiction (12) et le vecteur d'hypothèse (13) sur la base d'une différence entre le vecteur de prédiction (12) et le vecteur d'hypothèse (13), un écart dans la direction orthogonale par rapport au vecteur de prédiction (12) étant évalué plus rigoureusement qu'un écart dans la direction longitudinale par rapport au vecteur de prédiction (12) ou un écart dans la direction orthogonale par rapport au vecteur d'hypothèse (13) étant évalué plus rigoureusement qu'un écart dans la direction longitudinale par rapport au vecteur d'hypothèse (13) lors du calcul du degré de similitude entre le vecteur de prédiction (12) et le vecteur d'hypothèse (13), et
   - évaluer une plausibilité du vecteur d'hypothèse (13) sur la base du degré de similitude calculé, une évaluation étant effectuée afin de déterminer si le vecteur d'hypothèse (13) décrit un mouvement réel de la caractéristique (4) entre la deuxième image (2) et la troisième image (3),

   **caractérisé en ce que** l'unité de calcul (40) est conçue pour, lors du calcul du degré de similitude, déterminer la différence au moyen d'un vecteur de différence (21), lequel est généré en formant une différence entre le vecteur de prédiction (12) et le vecteur d'hypothèse (13), la différence étant déterminée au moyen de deux composantes de vecteur (22, 23) du vecteur de différence (21) qui représentent une mesure de l'écart dans la direction orthogonale et une mesure de l'écart dans la direction longitudinale, une pondération différente des deux composantes de vecteur (22, 23) étant effectuée.

**FIG. 1**

EP 3 673 459 B1

**FIG. 2**

**FIG. 3**

**FIG. 4**

**FIG. 5**

# EP 3 673 459 B1

## IN DER BESCHREIBUNG AUFGEFÜHRTE DOKUMENTE

**In der Beschreibung aufgeführte Nicht-Patentliteratur**

- **JEFFREY W. MCCANDLESS**. etection of aircraft in video sequences using a predictive optical flow algorithm. *OPTICAL ENGINEERING*, 01 March 1999, vol. 38 (3), 523-530